Europäisches Patentamt

European Patent Office

Office européen des brevets

(11) Veröffentlichungsnummer: **0 180 966**

**B1**

# (12) EUROPÄISCHE PATENTSCHRIFT

(45) Veröffentlichungstag der Patentschrift: 05.09.90

(51) Int. Cl.⁵: **H 02 M 7/523**

(21) Anmeldenummer: 85114077.2

(22) Anmeldetag: 05.11.85

(54) Wechselrichter mit einer Last, die eine Wechselrichter-Ausgangsspannung bestimmter Kurvenform und Frequenz erzwingt.

(30) Priorität: 09.11.84 DE 3441000
09.11.84 DE 3441001

(43) Veröffentlichungstag der Anmeldung:
14.05.86 Patentblatt 86/20

(45) Bekanntmachung des Hinweises auf die
Patenterteilung:
05.09.90 Patentblatt 90/36

(84) Benannte Vertragsstaaten:
CH DE FR GB IT LI SE

(56) Entgegenhaltungen:
FR-A-1 593 372
FR-A-2 146 059
FR-A-2 228 318
ETZ, Band 104, Heft 24, 1983, Seiten 1246-1251;
W. BÖSTERLING et al.: "Thyristorarten ASCR,
RLT und GTO - Technik und Grenzen ihrer
Anwendung"

ETZ, Band 104, Heft 24, 1983, Seiten 1252-1255;
R. BRAUKMEIER: "Zwischen Transistor und
Thyristor - Der GTO-Thyristor"

(73) Patentinhaber: LEYBOLD
AKTIENGESELLSCHAFT
Wilhelm-Rohn-Strasse 25
D-6450 Hanau am Main 1 (DE)

(72) Erfinder: Thomas, Friedrich-Werner, Dr.-Ing.
Schwarzwaldweg 2
D-6460 Gelnhausen (DE)
Erfinder: Thorn, Gernot, Dipl.-Ing.
Posener Strasse 8
D-6450 Hanau am Main 1 (DE)
Erfinder: Dahlinger, Dietrich, Prof.
Mittenmayerweg 7
D-6100 Darmstadt (DE)
Erfinder: Sperzel, Wolfgang, Ing.
Heimatfrieder. 3
D-6460 Gelnhausen (DE)
Erfinder: Hubertus, Guido, Ing.
Portlandstrasse 20
D-6500 Mainz (DE)
Erfinder: Stürmer, Johann, Ing.
Pestalozzistrasse 8
D-6465 Freigericht 1 (DE)

(74) Vertreter: Schickedanz, Willi, Dipl.-Ing.
Langener Strasse 68
D-6050 Offenbach/Main (DE)

**Beschreibung**

Die Erfindung betrifft einen Wechselrichter mit einer Last, die eine Wechselrichter-Ausgangsspannung bestimmter Kurvenform und Frequenz erzwingt.

Wechselrichter formen Gleichstrom im Wechselstrom um, wobei Energie vom Gleichstrom- in das Wechselstromsystem fließt. Man unterscheidet im allgemeinen zwischen selbstgeführten und fremdgeführten Wechselrichtern. Bei den fremdgeführten Wechselrichtern wird eine fremde, nicht zum Wechselrichter gehörende Wechselspannungsquelle benötigt, die während der Dauer der Kommutierung die Kommutierungsspannung zur Verfügung stellt. Selbstgeführte Wechselrichter benötigen keine fremde Wechselspannungsquelle zur Kommutierung. Die Kommutierungsspannung wird vielmehr von einem zum Wechselrichter gehörenden Energiespeicher zur Verfügung gestellt.

Die von selbstgeführten Wechselrichtern erzeugte Wechselspannung kann, da sie nicht von einer fremden Wechselspannung abhängt, bezüglich ihrer Frequenz in weiten Bereichen geändert werden.

Neben den selbstgeführten und den fremdgeführten Wechselrichtern werden auch noch die lastgeführten Wechselrichter unterschieden, die gewissermaßen eine Zwischenstellung einnehmen und einmal mehr als fremdgeführte und einmal mehr als selbstgeführte Wechselricht anzusehen sind. Beim lastgeführten Wechselrichter stellt die Last die Kommutierungsspannung zur Verfügung. Da ein Wechselrichter für die natürliche Kommutierung induktive Blindleistung braucht, muß der Laststrom eine kapazitive Komponente aufweisen. Diese Bedingung kann von Parallel- und Reihenschwingkreisen oder von einer übererregten Synchronmaschine erfüllt werden.

Ein- oder mehrphasige Parallel- und Reihenschwindigkreis-Wechselrichter sind bereits vielfältig bekannt (K. Heumann: Grundlagen der Leistungselektronik, Teubner-Verlag Stuttgart, 1975, Seite 110—113; DE—AS 1 615 126; DE—AS 1 563 132; DE—OS 2 421 193; DE—OS 3 237 716; GB—PS 1494338). Bei allen diesen Wechselrichtern werden solche Schaltmittel verwendet—vorzugsweise symmetrisch sperrende Thyristoren, sog. SCR-Thyristoren—die Kommutierungsmittel benötigen und bei denen die Reihen- oder Parallelschwingkreis als Kommutierungsmittel dienen.

Derartige Kommutierungsmittel, die außer bei SCR-Thyristoren auch noch bei ASCR- und RLT-Thyristoren erforderlich sind, verursachen elektromagnetisch bedingte Geräusche. Diesen Nachteil besitzen die Abschalt- oder GTO (=Gate Turn Off)-Thyristoren nicht, da sie überhaupt keine Kommutierungsmittel benötigen. Mit GTO-Thyristoren aufgebaute Wechselrichter sind deshalb leiser und meistens auch kleiner als vergleichbare Wechselrichter, die mit anderen Thyristoren aufgebaut sind. Allerdings erfordern herkömmliche GTO-Schaltungen oft einen Mehraufwand im Steuerkreis und in der Schutzbeschaltung.

Der Hauptvorteil des GTO-Thyristors liegt darin, daß er allein durch einen Rückwärtssteuerstrom abgeschaltet werden kann. Dies geht allerdings etwas auf Kosten anderer Eigenschaften, wie beispielsweise Einschaltzeit, Durchlaßverlustleistung, Überstromtragfähigkeit und Schaltverlustleistung. Die Schaltverlustleistung nimmt direkt proportional mit der Wiederholfrequenz zu. Deshalb erreicht der GTO-Thyristor im allgemeinen nicht die obere Wiederholfrequenz von ASCR- und RLT-Thyristoren. In der Regel ist die Abschaltverlustleistung größer als die Einschaltverlustleistung. Da die Abschaltverlustleistung bei jedem Schaltvorgang auftritt, wird ihr Anteil an der Gesamtverlustleistung mit zunehmender Wiederholfrequenz immer spürbarer und muß bei jeder Anwendung von GTOs berücksichtigt werden. (Zeitschrift etz, Band 104, 1983, Nr. 24, S. 1246—1251: Thyristorarten ASCR, RLT und GTO, Technik und Grenzen ihrer Anwendung; Zeitschrift etz, Band 104, Nr. 24, S. 1252—1255; Zwischen Transistor und Thyristor—der GTO-Thyristor).

Es ist indessen bereits bekannt, die Spannungssteilhalt beim Abschalten durch geeignete Beschaltungsmaßnahmen zu begrenzen, beispielsweise durch eine sogenannte RCD-Beschaltung. In einem solchen Fall ist jeder Abschaltthyristor mit einer eigenen RCD-Beschaltung versehen (vergl. Bösterling, Ludwig, Schimmer und Tscharn: Praxis mit dem GTO, Abschaltthyristoren für selbstgeführte Stromrichter, Sonderdruck der Firma AEG-Telefunken, 1983; Berg, Bösterling und Luse: Abschaltthyristoren (GTO) für neue Stromrichterkonzepte, Firmendruckschrift der AEG-Telefunken, 1984). Trotz dieser bekannten Maßnahmen ist der Frequenzbereich, für den die bekannten Abschaltthyristoren verwendet werden können, relativ eng begrenzt, und zwar können bei weitgehender Ausnutzung des höchst zulässigen Durchlaßstroms Frequenzen zwischen etwa 3 und 5 khz als Maximalfrequenz angesehen werden. Versuche, diese Frequenz zu erhöhen, hatten bisher stets eine entsprechende Verminderung des höchst zulässigen Durchlaßstroms zur Folge, da andernfalls die thermische Belastung der Thyristoren nicht mehr beherrschbar war.

Es gibt indessen heute eine ganze Reihe von Verbrauchern, bei denen höhere Frequenzen bis zu 20 bzw. 30 kHz benötigt werden. Eine sehr breite Anwendungsmöglichkeit besteht etwa bei statischen Umrichtern für induktive Erwärmungsanlagen, insbesondere für induktive Schmelzanlagen. Ein weiteres Anwendungsgebiet betrifft kompakte Stromversorgungen mit entsprechend kleinen magnetischen Baugruppen, wie beispielsweise Transformatoren.

Für große Leistungen werden für die vorstehend angegebenen Zwecke heute fast ausschließlich Umrichter mit sogenannten Frequenz-Thyristoren eingesetzt, die aufwendige Kommutierungs-Hilfsmittel benötigen sowie schaltungstechnische Maßnahmen erforderlich machen, um die erforderliche Schonzeit $t_s$ zu gewährleisten. Auch für diese Art von Umrichtern ist die Begrenzung der Schaltfrequenz auf einige Kiloherz erforderlich, oftmals von der Maßnahme einer Reduzierung der Bauelementenausnutzung begleitet, d.h. der Reduzierung der Schaltströme, um die für das Bauelement zulässige Verlustleistung nicht zu überschreiten.

Bei einem bekannten Verfahren zur Beseitigung der Gleichstromerhöhung über Nennstrom bei aus steuerbarem Gleichrichter sowie Wechselrichter und Parallelschwingkreis bestehendem Schwingkreisumrichter mit steuerbarer Betriebsfrequenz zur induktiven Erwärmung von Metallblöcken wird beim Füllen des Induktors mit Metallblöckchen und sinkender Induktivität die Betriebsfrequenz bis zur Betriebsnennfrequenz gesteigert (FR—A—1 593 372=DE—A—1 615 126). Beim Entleeren des mit Metallblöckchen gefüllten Induktors und ansteigender Induktor-Induktivität wird dagegen die Betriebsfrequenz entsprechend der aus dem Induktor ausgestoßenen Metallblöckchen verringert, und zwar als Funktion davon, daß jeweils der Phasenwinkel zwischen Nulldurchgang des Wechselrichterausgangsstroms und dem nächstfolgenden Nulldurchgang der Wechselrichterausgangsspannung konstant geregelt wird. Bei diesem bekannten Verfahren werden indessen weder Abschaltthyristoren vorgesehen noch wird der Ausgangsstrom des Wechselrichters stets im Nulldurchgang der Ausgangsspannung geschaltet.

Ferner ist eine Anordnung zur Versorgung einer elektrischen Last mittels eines Wechselrichters bekannt, wobei diese Last eine Induktivität ist und in bezug auf den Wechselrichter mit einem Kondensator parallelgeschalter ist, mit dem sie einen Schwingkreis bildet (DD-Z: Elektrie, Bd. 35 (1981), Heft 12, Seiten 651 bis 655). Hierbei stimmt die Eigenfrequenz des Schwingkreises mit der Ausgangsfrequenz des Wechselrichters im wesentlichen überein. Der Wechselrichter ist hierbei jedoch mittels herkömmlicher Thyristoren realisiert, so daß aufwendige Kommutierungs hilfsmittel benötigt werden.

Weiterhin ist ein Stromwechselrichter bekannt, der Abschaltthyristoren aufweist, welche den Rückwärtsstrom sperren können (US—PS 4 477 868). Dieser Wechselrichter wird von einer äußeren Gleichstromquelle gespeist und liefert seinerseits rechteckförmige Ströme. An diesen Wechselrichter angeschlossen ist ein Resonanzkreis, der eine Induktivität aufweist, welche mit einem Kondensator in Reihe geschaltet ist. Hierbei leigt die Ausgangsspannung des Wechselrichters an der erwähnten Induktivität. Ein Regelung des Phasenverhältnisses zwischen der Ausgangsspannung und dem Ausgangsstrom des Wechselrichters findet hierbei jedoch nicht statt. Vielmehr ist bei dem bekannten Stromrichter aufgrund des festen Schwingkreises und der Spannungsregelung über Frequenzverstellung keine Phasenerkennung erforderlich. Hierdurch können die Abschaltthyristoren nur mit einer begrenzten Schaltfrequenz betrieben werden.

Schließlich ist eine Phasenwinkel-Regelanordnung für Hochfrequenz-Umrichter bekannt, mit welcher die Arbeitsfrequenz des Umrichters als Funktion der Phasenverschiebung zwischen dem Wechselstrom, der auf eine Last, die aus Widerstand, Induktivität und Kapazität besteht, gegeben wird und eine Wechselspannung über der Last verwendet                          wird (FR—A—2 146 059=US—A—3 718 852). Auch bei dieser Regelanordnung werden weder Abschaltthyristoren verwendet, noch wird ein Ausgangsstrom stets im Nulldurchgang einer Ausgangsspannung vorgenommen.

Der Erfindung liegt die Aufgabe zugrunde, einen Wechselrichter mit GTO-Thyristoren zu schaffen, bei dem die Abschaltverlustleistung der GTO-Thyristoren drastisch reduziert ist.

Die Aufgabe wird durch die Merkmale des Anspruches 1 gelöst.

Bei einer vorteilhaften Weiterbildung der Erfindung wird eine Schaltungsanordnung eingesetzt, mittels der die Zeit zwischen Abschaltimpuls des leitenden Zweiges und des Einschaltungsimpulses des anderen Zweiges definiert eingestellt werdsn kann.

Der mit der Erfindung erzielte Vorteil besteht insbesondere darin, daß der Wechselrichter mit einer wesentlich höheren Frequenz bei voller Belastbarkeit der Abschaltthyristoren betrieben werden kann. Die Frequenzerhöhung beträgt ein Vielfaches im Vergleich zu herkömmlichen GTO-Wechselrichtern.

Durch die erfindungsgemäße Schaltungsanordung, die noch durch die bekannte RCD-Beschaltung ergänzt werden kann, wird die Anstiegssteilheit der Spannung nach dem Abschalten des Stroms derart stark herabgesetzt, daß die Abschaltverlustleistung auf einen Bruchteil des ursprünglichen Werts verringert wird. Infolgedessen kann die Frequenz bei gleicher thermischer Belastung der Bauelemente erheblich heraufgesetzt werden, beispielsweise auf Werte wesentlich oberhalb von 10 kHz, ohne daß die Wärmeabfuhr von den Abschaltthyristoren zu einem Problem wird. Folglich können gleichzeitig Grenzdaten, die für den Abschaltthyristor gelten, mit den technisch ühblichen Sicherheitsabständen ausgenutzt werden.

Die Erfindung ist besonders vorteilhaft zum Erwärmen oder Schmelzen von Werkstoffen geeignet, die einen Teil der Last, insbesondere eines Parallelschwingkreises bilden. Werden ferromagnetische Werkstoffe verwendet, bei denen sich der magnetische Widerstand bei Überschreiten der Curie-Temperatur wesentlich ändert, so wird der Schwingkreis verstimmt, was aber durch die erfindungsgemäße Nachregelung wieder ausgeglichen wird.

Ausführungsbeispiel der Erfindung sind in der Zeichnung dargestellt und werden im folgenden näher beschrieben. Es zeigen:

Fig. 1 ein Diagramm mit den zeitlichen Verläufen von Stom und Spannung bei einem herkömmlichen lastgeführten Thyristorumrichter;

Fig. 2 ein Diagramm mit den Verläufen von Strom und Spannung bei einer klassischen Anordnung mit Abschaltthyristoren;

Fig. 3 ein Prinzipschaltbild des erfindungsgemäßen Wechselrichters;

Fig. 4 ein Diagramm mit den Verläufen von Strom und Spannung bei einem erfindungsgemäß beschalteten Abschaltthyristor;

Fig. 5 eine erfindungsgemäße Schaltungsanordnung, bei der als Last des Wechselrichters ein Parallelschwingkreis vorgesehen ist;

Fig. 6 Einzelheiten des Wechselrichters mit verschiedenen Induktivitäten bzw. Verbrauchern, wobei die GTO-Thyristoren des Wechselrichters eine Brückenschaltung bilden.

Fig. 7 eine Phasenkennungsschaltung, welche eine Phasenverschiebung zwischen der Ausgangsspannung und dem Ausgangsstrom des Wechselrichters erkennt und ein Signal abgibt, das Betrag und Vorzeichen der Phasenverschiebung anzeigt;

Fig. 8 ein Diagramm mit den Verläufen von Strom und Spannung bei einem erfindungsgemäß beschalteten GTO-Thyristor, wobei die Ein- und Ausschaltimpulse dargestellt sind.

Fig. 9a eine GTO-Thyristor-Brückenschaltung;

Fig. 9b ein Diagramm mit den zeitlichen Verläufen von Strom un Spannung bei zwei gegenüberliegenden Thyristoren einer GTO-Thyristor-Brückenschaltung;

Fig. 10 eine Impulsformungs- und verschiebungsschaltungsanordung;

Fig. 11 eine Detaildarstellung des Schaltungsanordnung gemäß Fig. 10,

Fig. 12 eine Ansteuerschaltung für eine GTO-Brückenschaltung.

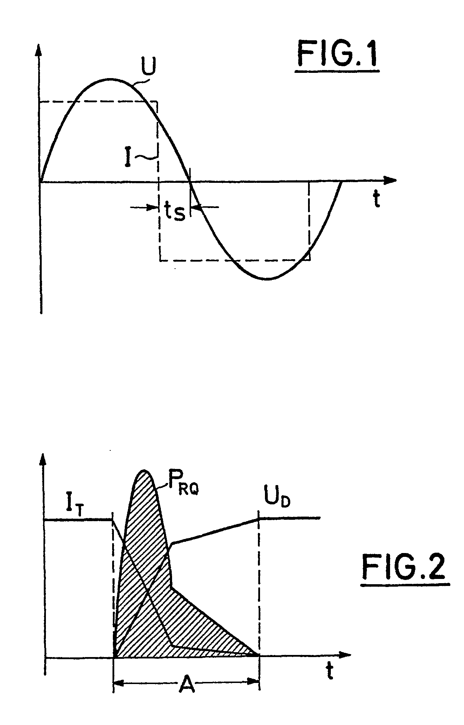

Die Figur 1 zeigt über der Zeit (Abszisse) den Verlauf von Strom I und Spannung U bei einem lastgeführten Thyristorumrichter. Aus Gründen einer einwandfreien Kommutierung und des Abbaus der Ladungsträger innerhalb der sogenannten Freiwerdezeit ist eine Phasenverschiebung $t_s$ zwischen Strom und Spannung erforderlich. Diese Phasenverschiebung bringt zwangsläufig eine Erhöhung de Schaltverluste und eine Frequenzbegrenzung mit sich, $t_s$ ist hierbei die sogennante "Schonzeit".

Die Figur 2 entspricht weitgehend Bild 6 in dem oben erwähnten Sonderdruck "Praxis mit dem GTO—Abschaltthyristoren für selbstgeführte Strom richter". Innerhalb der Abschaltzeit A fällt der Strom $I_T$ gemäß dem dem gezeigten Kurvenverlauf, und innerhalb der gleichen Zeit steigt die Spannung $U_D$, gleichfalls gemäß dem eingezeichneten Spannungsverlauf. Das Produkt aus Strom und Spannung führt zu dem Kurvenverlauf, der die schraffierte Fläche umgibt. Diese wiederum ist ein Maß für die infolge des steilen Spannungsanstiegs hohe Abschaltverlustleistung $P_{QR}$. Hieraus ist ersichtlich, daß die Verlustleistung mit zunehmender Frequenz wächst, so daß die Betriebstemperaturen der Abschaltthyristoren nicht mehr beherrschbar sind.

Aufgrund dieser Tatsache ist der Einsatz der Abschaltthyristoren (GTO) wegen der geschilderten Eigenschaften hinsichtlich der Schaltfrequenz gleichermaßen eingeschränkt und zeigt daher diesbezüglich keine wesentlichen Vorzüge gegenüber bekannten Umrichterschaltungen mit Frequenzthyristoren und Phasenverschiebung gemäß Figur 1.

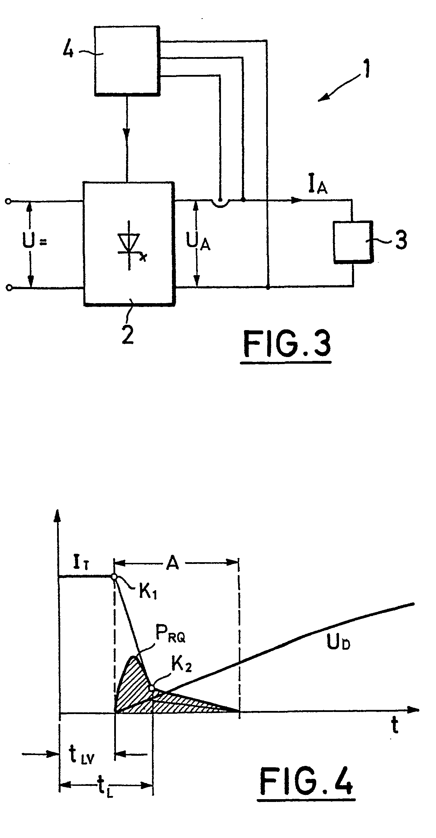

In der Figur 3 ist ein Prinzipschaltbild der Erfindung dargestellt. Mit U ist eine Gleichspannung bezeichnet, die durch die erfindungsgemäße Schaltungsanordnung 1 in eine Wechselspannung $U_A$ umgeformt wird. Die Schaltungsanordnung 1 weist einen GTO-Thyristorumrichter 2 auf, dem die Gleichspannung $U_=$ zugeführt wird. Am Ausgang des GTO-Thyristorumrichters 2 liegt eine Last, welche Frequenz und Kurvenform der Ausgangsspannung $U_A$ des Thyristor-Wechselrichters 2 bestimmt. Die Ausgangsspannung $U_A$ des Wechselrichters 2 sowie der zugehörige Ausgangsstrom $I_A$ werden durch eine Einrichtung 4 erfaßt und ausgewertet. Diese Einrichtung 4 steuert die GTO-Thyristoren des Wechselrichters 2 nun derart, daß eine eventuelle Phasenverschiebung zwischen $U_A$ und $I_A$ aufgehoben wird.

Im Gegensatz zu herkömmlichen Thyristor-Wechselrichtern gemäß Fig. 1 wird also gerade kein Löschwinkel zugelassen.

In der Fig. 4 ist dargestellt, wie sich Strom und Spannung am Thyristor verhalten, wenn die erfindungsgemäße Schaltungsanordnung eingesetzt wird. Hierbei ist angenommen, daß die Last 3 durch einen Parallelschwingkreis dargestellt wird, der eine Spannung $U_D$ erzwingt. Es ist deutlich zu erkennen, daß die Spannung $U_D$ innerhalb des Abschaltzeit A eine wesentlich geringere Anstiegssteilheit aufweist als bei dem Fall gemäß Fig. 2. Der Abschaltstrom $I_T$ hat im wesentlichen den gleichen Verlauf wie in Fig. 2. Es ergibt sich jedoch, daß das Produkt aus I und U zu einem viel flacheren Kurvenverlauf—vergl. die Umrißlinie der schraffierten Fläche—führt, als im Falle der Fig. 2. Infolgedessen ist auch die Verlustleistung sehr viel niedriger, und die Schaltungsanordnung gemäß Fig. 3 kann infolgedessen bei voller Auslastung der Abschaltthyristoren mit wesentlich höheren Frequenzen betrieben werden. Der Spannungsverlauf $U_D$ gemäß Fig. 4 entspricht einer Sinuslinie, die durch die Existenz eines Schwingkreises erzwungen wird.

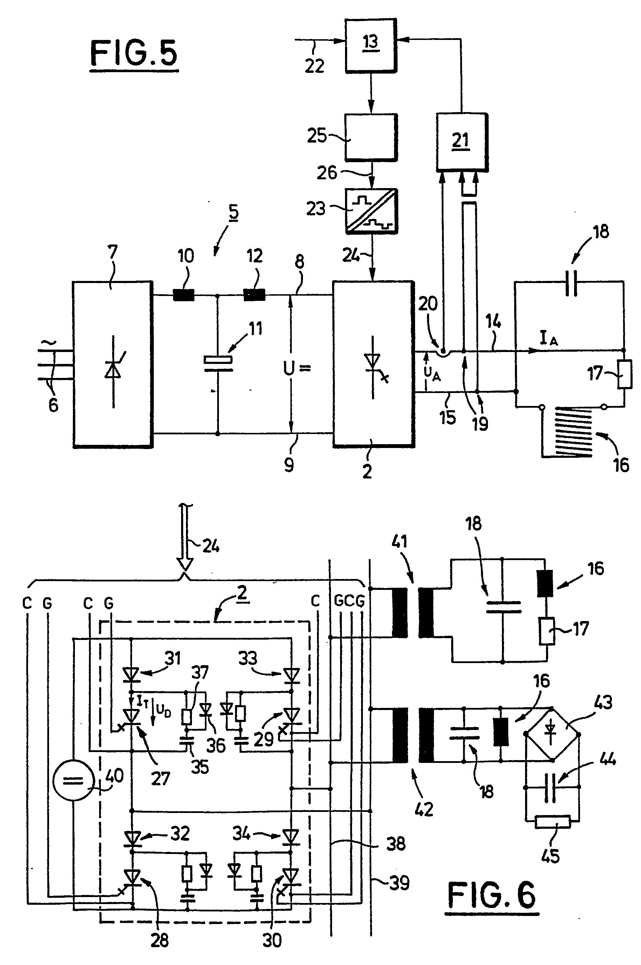

In der Fig. 5 ist die Schaltungsanordnung gemäß Fig. 3 nocht einmal genauer dargestellt. Man erkennt hierbei eine Stromversorgungsquelle 5, die als Umrichter ausgeführt ist und über eine Dreifachleitung 6 mit Drehstrom versorgt wird. Durch einen Thyristor-Gleichrichter 7 wird eine Gleichspannung erzeugt, die an den Leitungen 8 und 9 ansteht. Der hierdurch gebildete Gleichstromkreis besitzt eine Glättungsdrossel 10, einen Glättungskondensator 11 und eine Zwischenkreisdrossel 12.

Die Leitungen 8 und 9 führen zu dem Wechselrichter 2, der mit Abschaltthyristoren (GTOs) bestückt ist. Dieser Wechselrichter wird durch einen Taktgeber 13 gesteuert. Eine frequenzmäßige Steuerung von Wechselrichtern ist als solche bereits bekannt (GB—PS 13 68 216, GB—PS 14 94 338, DE-OS 32 37 716, DE-Z: Sie-

mens-Prospekt, Thyristorgesteuerte Schwing-kreis-Umrichter für induktive Erwärmungsanlagen, Bestell-Nr.E 238/1951; DD-Z: Elektrie, Band 35, 1981, Seiten 651—655). Allerdings werden bei diesen Steuerungen keine GTO-Thyristoren verwendet, und es wird außerdem keine exakte Phasengleichheit zwischen Strom und Spannung angestrebt, sondern immer eine Phasenverschiebung bewußt herbeigeführt.

Der Ausgang des Wechselrichters 2 führt über Leitungen 14 und 15 zu einer Induktivität 16, die im vorliegenden Fall als Zylindrische Induktionsspule ausgeführt ist. In dieser Spule 16 kann das zu behandelnde und/oder zu schmelzende Material untergebracht werden, wodurch die gesamte Last eine zusätzlich ohm'sche Komponente erhält, die hier durch einen in Reihe geschalteten Ersatzwiderstand 17 dargestellt ist. Parallel zur Induktivität 16, bezogen auf den Wechselrichter 2, ist ein Kondensator 18 angeordnet, der sich mit der Induktivität 16 zu einem Schwingkreis ergänzt, der beispielsweise für eine Frequenz von 20 kHz ausgelegt ist. Sobald die Induktionsspule 16 mit einer entsprechenden Frequenz beaufschlagt wird, ist es möglich, das in dieser befindliche Material zu schmelzen oder nur zu erwärmen, um beispielsweise die Oberfläche in Anwesenheit eines Reaktionsgases zu veredeln. Zu diesem Zweck kann die Induktivität 16 in einer nicht gezeigten Kammer untergebracht sein, in der die erforderliche Atmosphäre aufrechterhalten wird, die beispielsweise auch aus einem Vakuum und/oder einem Inertgas bestehen kann.

Den Leitungen 14 und 15 sind Abgriffe 19 und 20 für die Spannung $U_A$ bzw. den Strom $I_A$ zugeordnet. Mittels dieser Abgriffe 19 und 20 läßt sich beispeilsweise die Phasenlage zwischen $U_A$ und $I_A$ mittels eines Meß- und Anzeigegeräts überwachen. Die Abgriff 19 und 20 sind einer Regelanordnung 21 aufgeschaltet, deren Ausgang wiederum einem Taktgeber 13 aufgeschaltet ist. In der Regelanordnung 21 werden Vorzeichen und Betrag der Phasenverschiebung zwischen $U_A$ und $I_A$ erkannt und mittels eines Integrationsglieds in ein vorzeichengerechtes, der Phasenverschiebung proportionales Ausgangssignal umgesetzt. Dieses dient als Eingangssignal für den Taktgeber 13, der als Spannungs-Frequenzwandler ausgebildet ist. Mit anderen Worten, die Ausgangsfrequenz des Taktgebers 13 ist der Eingangsspannung proportional. Der Taktgeber 13 ist mit einem weiteren Eingang 22 ausgestattet, durch den beispielsweise eine Handverstellung des Ausgangsfrequenz des Taktgebers 13 möglich ist. Steigt also beispielsweise die Ausgangsspannung der Regelanordnung 21 durch voreilenden Strom, so wird die Ausgangsfrequenz des Wechselrichters 2 hochgeregelt, und die Thyristoren werden früher gezündet. Dies führt dazu, daß die Phasenverschiebund auf einen kleinstmöglichen, durch Regelabweichung bedingten Wert ausgeregelt wird. Sinkt hingegen die Ausgangsspannung der Regelanordnung 21 durch nachteilenden Strom, so wird die Ausgangsfrequenz des Wechselrichters 2 heruntergeregelt, und die Thyristoren werden später gezündet. Auf diese Weise werden die Phasenverschiebung und auch die Blindleistung auf einen kleinstmöglichen Wert heruntergeregelt. Zwischen dem Taktgeber 13 und dem Wechselrichter 2 befindet sich eine Anpassungsvorrichtung 25 für die Verschiebung der Einschaltimpulse relativ zu den Ausschaltimpulsen der Abschaltthyristoren. Diese Verschiebung wird noch im Zusammenhang mit den nachfolgenden Figuren näher beschrieben.

In der Figs. 6 sind Einzelheiten des Wechselrichters 2 gezeigt. Dieser besitzt insgesamt vier in Brückenschaltung angeordnete Abschaltthyristoren 27, 28, 29, 30. Da diese Abschaltthyristoren 27—30 im vorliegenden Fall nicht rückwärtssperrend sind, sind ihnen in Reihenschaltung schnellsperrende Dioden 31, 32, 33, 34 zugeordnet. Ferner sind den Abschaltthyristoren zum Schutz gegen unzulässige dynamische Beanspruchung einfache Widerstands-Kondensator-Netzwerke zugeordnet, sogenannte RCD-Glieder 35, 36, 37, von denen jedoch nur eines mit Bezugszahlen versehen ist. Diese RCD-Glieder 35, 36 37 sind jedoch nicht zwingend erforderlich, bringen jedoch zusammen mit der Anordnung gemäß den Figuren 3 und 5 überraschende Effekte.

Der Wechselrichter 2 ist mit zwei Sammelschienen 38, 39 verbunden, an die wahlweise verschiedene, die Induktivität 16 und die Kapazität 18 enthaltende Schwingkreise oder elektrische Maschinen anschließbar sind. So ist beispielsweise an die Sammelschienen 38 und 39 unmittelbar der Schwingkreis anschließbar, der im rechten Teil der Fig. 5 dargestellt ist. In der Fig. 6 sind jedoch noch zwei alternative Möglichkeiten gezeigt, wie die betreffenden Schwingkreise über Transformatoren 41 bzw. 42 angeschlossen werden können. Im Fall des oberen, über den Transformator 41 angeschlossenen Schwingkreises stellt die Induktivität 16 selbst den Verbraucher dar, d.h. sie bildet in Analogie zur Anordnung der Fig. 5 eine Induktionsspule, in der das aufzuheizende Material untergebracht ist. Der dadurch bedingte ohmsche Widerstand ist durch den Ersatzwiderstand 17 angedeutet.

Im Fall des durch den Transformator 42 angeschlossenen Schwingkreises ist parallel zu diesem eine Gleichrichterbrücke 43 geschaltet, die zu einer Last 45 in Form eines ohm'schen Widerstands führt. Die auch hier vorhandene Induktivität 16 muß also nicht notwendig der eigentliche Verbraucher sein. Bei der ohm'schen Last 45 kann es sich beispielsweise um einen Heizwiderstand für einen Widerstandsofen handeln. Ein Glättungskondensator 44 sorgt hier für die weitgehende Glättung der Ausgangsspannung der Gleichrichterbrücke 43.

Über die Vierfach-Steuerleitung 24 wird der Wechselrichter 2 in der Weise gesteuert, daß alternierend die Abschaltthyristoren 27, 30 und die Abschaltthyristoren 28, 29 auf Durchlaß geschaltet sind. Speziell bei noch weiter gesteigerten Frequenzen ist es hierbei zweckmäßig, die Einschaltimpulse der Abschaltthyristoren 27, 30 so zu legen, daß sie einen zeitlichen Abstand von den vorausgehenden Abschaltimpulsen der jeweils anderen Abschaltthyristoren 28, 29 aufweisen und umgekehrt. Hierbei muß der zeitliche Abstand minimal der Löschverzugszeit und maximal der Löschzeit entsprechen. Dies wird im einzelnen noch weiter unten erläutert. Dabei soll einerseits der Spannungsanstieg nach dem Abschalten der einen Gruppe von Abschaltthyristoren nicht zu früh erfolgen, was zu höheren Verlusten führen würde, andererseits darf auch kein "Loch" zwischen den alternierend geschalteten Gruppen von Abschaltthyristoren auftreten, das gleichfalls zu einer unerwünschten Belastung der Abschaltthyristoren führen würde. Zum Zwecke der Einstellung genauer zeitlicher Relationen zwischen den Einschaltimpulsen einerseits und Ausschaltimpulsen andererseits, ist die Anpassungsvorrichtung 25 vorgesehen, die mit einer Vorrichtung 23 zur Potentialtrennung und Impulsformung gleichfalls über eine Vielfach-Steuerleitung 26 verbunden ist.

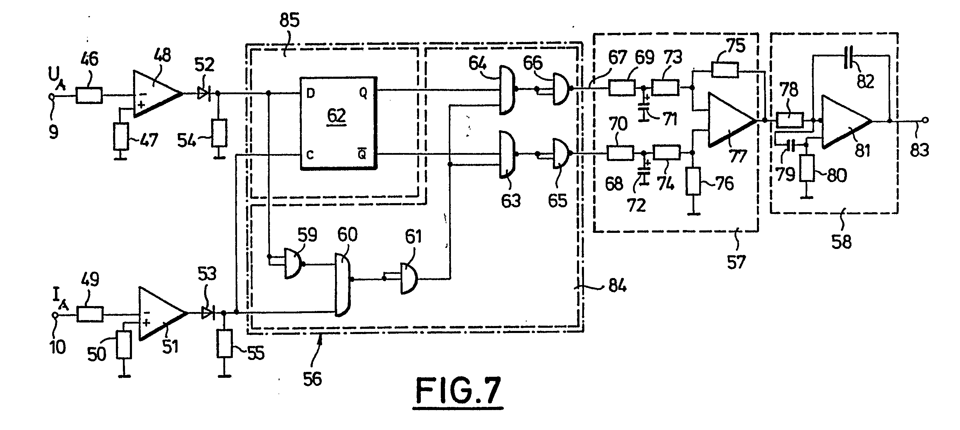

In der Fig. 7 ist eine Schaltungsanordnung gezeigt, welche im wesentlichen eine Konkretisierung der Regelanordnung 21 gemäß Fig. 5 darstellt. Die Ausgangsspannung $U_A$ und der Ausgangsstrom $I_A$ werden über Widerstände 46 bzw. 49 Komparatoren 48 bzw. 51 zugeführt, deren jeweils zweiter Eingang über einem Widerstand 47 bzw. 50 an Masse liegt. Die Komparatoren 48, 51 sind über eine Erkennungsschaltung 56 mit einem Differenzverstärker 57 und einem Phasenregler 58 verbunden. Das Ausgangssignal des Phasenreglers 58 gelangt über die Leitung 83 auf den bereits erwähnten Taktgeber 13, der als Spannungs-Frequenzwandler ausgebildet ist.

Den Komparatoren 48, 51 sind Dioden 52, 53 nachgeschaltet, so daß jeweils nur positive Signale an die Erkennungsschaltung 56 weitergeleitet werden. Die Kathode der Diode 53 ist über einen Widerstand 55 an Masse gelegt und außerdem mit einem Eingang eines NAND-Glieds 60 und einem Eingang eines Speichers, eines Flipflops 62, verbunden. Dieser Eingang des Flipflops 62 ist mit C bezeichnet.

Die Kathode der Diode 52 ist über einen Widerstand 54 an Masse gelegt und gleichzeitig mit einem anderen Eingang D des Flipflops 62 sowie über ein Negationsglied 59 mit einem anderen Eingang des NAND-Glieds 60 verbunden. Des Flipflop hat hier Speicherfunktion und ist deshalb gestrichelt umrahmt und mit 85 bezeichnet. Als Speicher 85 könnte auch ein anderes Bauelement dienen. Das NAND-Glied 60 führt mit seinem Ausgang auf ein Negationsglied 61, dessen Ausgang wiederum auf ein weiteres NAND-Glied 63 bzw. 64 geführt ist. Der zweite Eingang des NAND-Glieds 63 ist hierbei mit dem Q-Ausgang des Flipflops 62 verbunden, während der zweite Eingang des NAND-Glieds 64 mit dem Q-Ausgang des Flipflops 62 verbunden ist.

Der Ausgang des NAND-Glieds 64 liegt an dem Eingang eines Negationsglieds 66, das über hintereinander geschaltete Widerstände 69, 73 mit einem Eingang eines Differenzverstärkers 77 verbunden ist. Analog ist der Ausgang des NAND-Glieds 63 über ein Negationsglied 65 und über die hintereinandergeschalteten Widerstände 70, 74 mit einem anderen Eingang des Differenzverstärkers 81 verbunden. An die Verbindungsleitung zwischen den Widerständen 69, 73 bzw. 70, 74 ist hierbei ein Kondensator 71 bzw. 72 angeschlossen, der an Masse gelegt ist. Desgleichen liegt die Verbindungsleitung zwischen dem Widerstand 74 und dem Verstärker 77 über einen Widerstand 76 an Masse.

Der Ausgang des Differenzverstärkers 77, der über einen Widerstand 75 rückgekoppelt ist, ist mit dem Integrationsglied 58 verbunden, und zwar über einen Widerstand 78. Dieses Integrationsglied enthält einen Operationsverstärker 81 mit einem rückgekoppelten Kondensator 82, wobei der eine Eingange des Operationsverstärkers 81 mit einem Widerstand 80 verbunden ist, der an Masse liegt. Der andere Eingang des Operationsverstärkers 81, an den auch der rückgekoppelte Kondensator 82 und der Widerstand 78 angeschlossen ist, ist über einen Kondensator 79 mit dem einen Eingang verbunden.

Mit Hilfe der Erkennungsschaltung ist es möglich, vorzeichenrichtig eine Strom- oder Spannungsvoreilung festzustellen und den Betrag dieser Voreilung zu ermitteln. Da es sich bei den Bauelementen der Erkennungsschaltung 56 um an sich bekannte digitale Bauelemente handelt, deren Wirkungsweise bekannt ist, erübrigt sich eine nähere Beschreibung der Signalverarbeitung. Es ist jedoch festzuhalten, daß die Ausgänge 67, 68 der Erkennungsschaltung 56 solche Signale an den Verstärker 77 geben, daß an dessen Ausgang eine positive oder negative Spannung ansteht, deren Amplitude der Phasenverschiebung proportional ist.

Der Phasenregler 58 hat weger des Kondensators 82 in der Rückführung ein I-Verhalten. Die Schaltungen 56 und 57 messen den Istwert der Phasenverschiebung. Da der Sollwert Null ist, braucht er nicht vorgebenen zu werden. Es ist dabei von Bedeutung, daß die gesamte Anordnung mit der Ist-Frequenz des Wechselrichters 2 arbeitet.

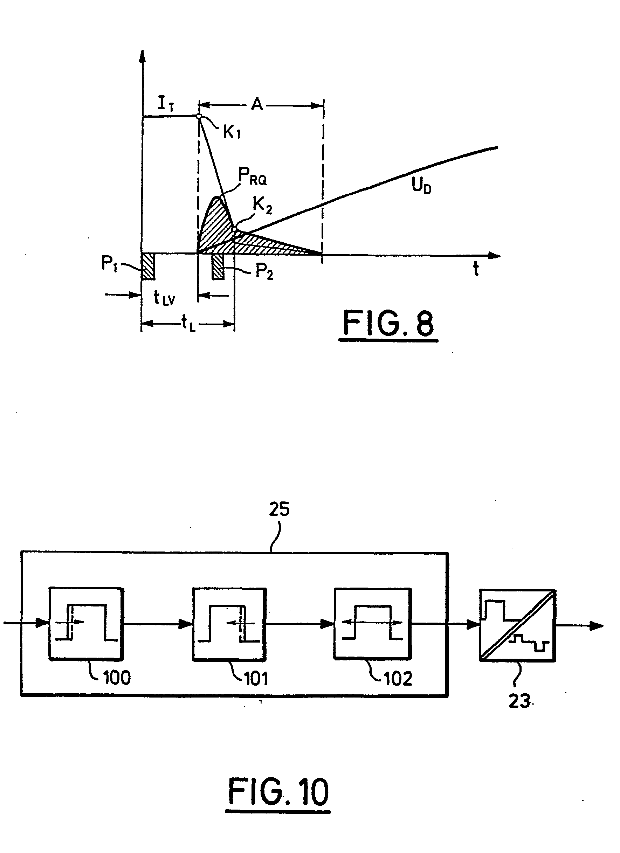

In der Fig. 8 ist gezeigt, wie das Verhältnis von Ein- und Ausschaltimpuls gewählt ist. Hierbei entspricht die Fig. 8 im wesentlichen der Fig. 4; es sind lediglich die Impulse $P_1$ und $P_2$ hinzugefügt. Ausgehend von dem Ausschaltimpuls $P_1$ erstreckt sich eine Löschverzugszeit $t_{LV}$, die etwa bis zu dem Augenblick reicht, in dem der Strom $I_T$ steil abfällt (Punkt $K_1$). Diese Löschverzugszeit beträgt bei den gängigen Abschaltthyristoren typischerweise etwa 4 Mikrosekunden. Ausgehend von dem Ausschaltimpuls $t_1$ erstreckt sich die sogenannte Löschzeit $t_L$ bis zu dem Punkt $K_2$, an dem die Kurve für den Strom $I_T$ einen weiteren deutlichen Knick aufweist. Der hinter dieser Knickstelle noch auftretende Strom wird auch als Schweifstrom bezeichnet. Dementsprechend heißt die Zeit, in der dieser Strom zu Null wird, die Schweifzeit. Die Löschzeit berechnet sind also aus der Zeit vom Ausschaltimpuls $P_1$ bis zum Nullwerden des Durchgangsstroms $I_T$ minus der sogenannten Schweifzeit. Diese Löschzeit beträgt bei handelsüblichen Abschaltthyristoren etwa 7 Mikrosekunden. Zur Erzielung optimaler Verhältnisse wird nunmehr der Einschaltimpuls $P_2$ der jeweils anderen Gruppe in einen zeitlichen Bereich gelegt, der zwischen der Löschverzugszeit $t_{LV}$ und der Löschzeit $t_L$ liegt, wie dies in der Fig. 8 dargestellt ist. Eine solche Maßnahme gewinnt mit zunehmender Kommutierungsfrequenz erheblich an Bedeutung, da mit steigender Frequenz auch hier die steigenden Abschaltverluste reduziert werden. Der zeitliche Abstand der Impulse $P_1$ und $P_2$ voneinander läßt sich durch die erwähnte Anpassungsvorrichtung 25 innerhalb bestimmter Grenzen verändern.

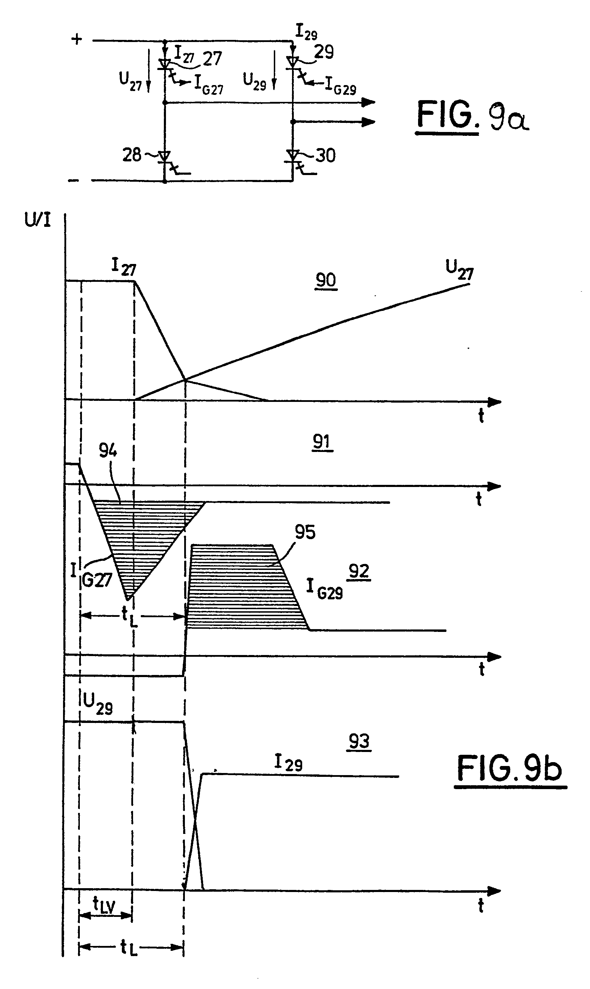

In der Fig. 9a sind die Abschaltthyristoren gemäß Fig. 6 noch einmal in vereinfachter Darstellung gezeigt, um die Ein- und Ausschaltvorgänge anhand der Fig. 9b zu verdeutlichen.

Im oberen Bereich 90 der Fig. 9b ist der Abschaltvorgang am Thyristor 27 dargestellt. Dieser Vorgang geht bereits aus den Figuren 4 und 8 hervor. Der Bereich 91 der Fig. 9b zeigt darüber hinaus auch den zeitlichen Verlauf des schematisch dargestellten Abschaltimpulses, der durch den Strom $I_{G27}$ am Steuergitter des Thyristors 27 gebildet wird. Der vom Strom $I_{G27}$ eingeschlossene, schraffierte Bereich 94 kann als "Abschaltimpuls" bezeichnet werden.

Die Länger des Impulses hängt dabei von der Art der Erzeugung ab. Wie im Bereich 92 der Fig. 9b erkennbar, wird der Einschaltimpuls durch den Strom am Steuergitter des Thyristors 29 umschrieben.

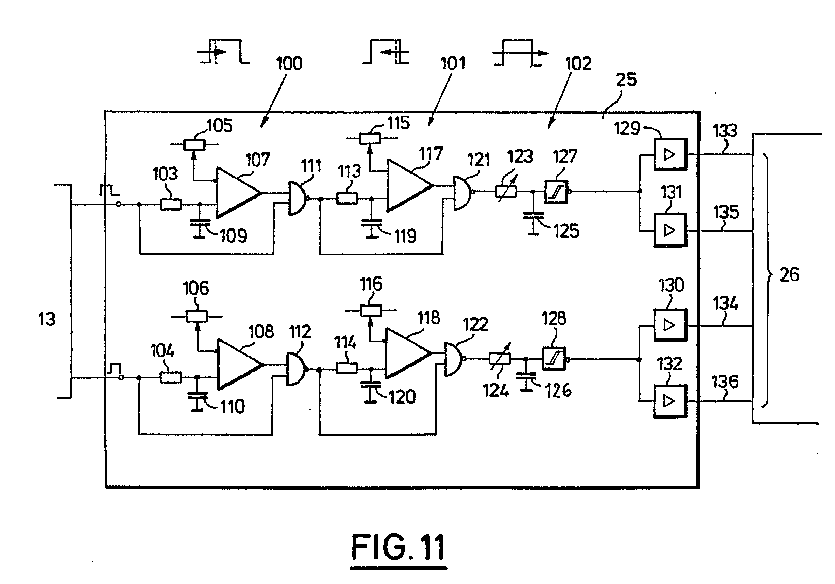

Im Bereich 93 der Fig. 9b sind die Spannung $U_{29}$ und der Strom $I_{29}$ dargestellt, und zwar bezüglich ihres Verlaufs während des Einschaltvorgangs am Thyristor 29. Man erkennt hierbei, daß $U_{29}$ zum Zeitpunkt $t_L$ abfällt, während $I_{29}$ erst ansteigt. Für die Optimierung der Erfindung ist die in den Bereichen 91 und 92 der Fig. 9b dargestellte relative Lage von Abschaltimpuls 94 und Einschaltimpuls 95 von großer Bedeutung. Würde beispielsweise der Impuls 94 näher an den Impuls 95 heranrücken, so würde die Abschaltung des Thyristors 27 später erfolgen. Der Thyristor 27 wäre dann noch eingeschaltet, während schon der Thyristor 28 und der Thyristor 29 eingeschaltet würden. Damit würde sich ein Querkurzschluß über die Strecke der Thyristoren 27 und 28 ergeben. Wird der Abstand zwischen den Impulsen 94 und 95 dagegen größer, so ist der Thyristor 27 bereits ausgeschaltet, während auch noch der Thyristor 29 ausgeschaltet ist. Durch die Zwischenkreisdrossel 12, die einen Strom erzwingt, würde der Strom weitergeschoben, und es entstünde eine Spannungsüberhöhung an allen Thyristoren. Wesentlicher Bestandteil der Erfindung ist daher eine leichte Justiermöglichkeit der Art, daß der zeitliche Abstand zwischen Löschimpuls und Zündimpuls immer maximal gleich der Löschzeit $t_L$ und minimal der Löschverzugszeit $t_{LV}$ ist. In der Fig. 10 ist die Schaltung 25 gemäß Fig. 5 noch einmal näher dargestellt. Man erkennt hierbei, daß die Schaltung 25 eine Einrichtung 100 zum Justieren der Anstiegsflanke eines Impulses aufweist, sowie eine Einrichtung 101 zur Justierung der Abfallflanke und eine Einrichtung 102 zur zeitlichen Verschiebung der justierten Impulse insgesamt. In der Fig. 11 sind Einzelheiten der in der Fig. 10 gezeigten Anordnung dargestellt. Vom Taktgeber 13 werden Impulse auf einen oberen und einen unteren Zweig gegeben, wobei beide Zweige in gleicher Weise aufgebaut sind, so daß nur der Aufbau und die Wirkungsweise eines Zweiges beschrieben werden soll.

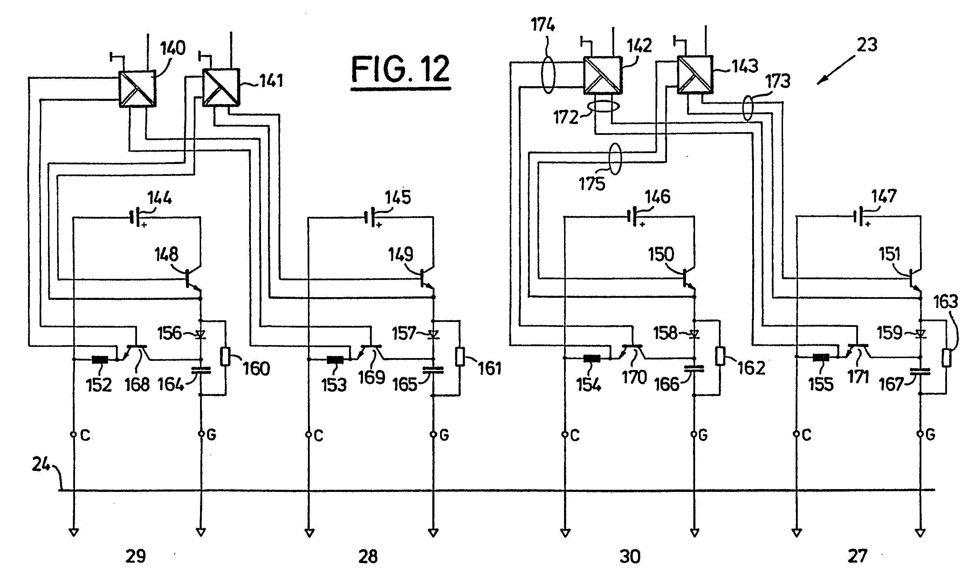

Ein vom Impulsgeber 13 kommender Impuls wird über einen Widerstand 103 einem Komparator 107 und direkt einem NAND-Glied 111 zugeführt. Vom Eingang des Komparators 107, an dem der Widerstand 103 liegt, ist ein Kondensator 109 an Masse gelegt. Über diesem Kondensator 109 bildet sich bei einem vom Impulsgeber 13 kommenden Impuls eine nach einer e-Funktion ansteigende Spannung. Über den Abgriff eines Widerstands 105 wird dem Komparator am anderen Eingang eine Referenzspannung zugeführt, durch die sich die Schaltschwelle des Komparators 107 verstellen läßt. Der Ausgang des Komparators 107 ist mit einem zweiten Eingang des bereits erwähnten NAND-Glieds 111 verbunden. Am Ausgang des NAND-Glieds 111 entsteht ein Impuls, dessen ansteigende Flanke sich mit dem Widerstand 105 verschieben läßt. Der mit seiner steilen Flanke verstellbare Impuls liegt am Widerstand 113, der direkt mit dem Ausgang des NAND-Glieds 111 verbunden ist, invertiert vor. Dieser Impuls wird durch den Komparator 117, der in gleicher Weise wie der Komparator 107 beschaltet ist, wieder in der vorher beschriebenen Form bearbeitet und auf einen Eingang des NAND-Glieds 121 geführt. Der andere Eingang des NAND-Glieds 121 ist direkt mit dem Ausgang des NAND-Glieds 111 verbunden. Am Ausgang des NAND-Glieds steht ein Impuls an, dessen fallende Flanke über den Widerstand 115 verschoben werden kann. Der Ausgang des NAND-Glieds 21 ist über einen regelbaren Widerstand, mit dem sich der gesamte Impuls verschieben läßt, mit einem an Masse liegenden Kondensator 125 und einem Inverter mit Schmitt-Trigger-Eingang 127 verbunden, der seinerseits zu zwei Verstärkern 129 bzw. 131 führt. Von diesen Verstärkern 129, 131 führen Leitungen 133, 135 zu der Einrichtung 23. In der Fig. 12 ist die Einrichtung 23 noch einmal näher dargestellt. Diese Einrichtung 23 weist für die Ansteuerung der Thyristoren 28, 29 bzw. 27, 30 identische Schaltungsanordnungen auf, weshalb nur eine beschrieben wird. Es sind hierbei Potentialtrenner 142, 143 mit jeweils zwei Eingängen und zweimal zwei Ausgängen vorgesehen. Die Ausgänge 173 des Potentialtrenners 143 sind mit der Basis bzw. dem Emitter eines Transistors 151 verbunden, während die entsprechenden Ausgänge 172 des Potentialtrenners 142 mit der Basis bzw. dem Emitter eines weiteren Transistors 171 verbunden sind. Analog sind die Ausgänge der Potentialtrenner 143, 142 mit den Transistor 150 bzw. 170 verbunden. Der Transistor 151 liegt an einem Pol einer Gleichspannungsquelle 147, deren anderer Pol über eine Induktivität 155 mit dem Emitter des Transistors 171 verbunden ist. Entsprechend ist der Kollektor des Transistors 150 mit einer weiteren Gleichspannungsquelle 146 verbunden, deren negativer Pol über eine Induktivität 154 an dem Emitter des Transistors 170 liegt. Zwischen dem Emitter des Transistors 151 und dem Kollektor der Transistors 171 liegt eine Diode 159 in Flußrichtung. In entsprechender Weise ist eine Diode 158 zwischen die Transistoren 150 und 170 geschaltet. Ein Kondensator 167, der mit der Kathode der Diode 159 verbunden ist, führt zu einem Anschluß des Thyristors 27. In entsprechender Weise ist ein Kondensator 166 an die Kathode der Diode 158 angeschlossen, der zu einem Anschluß des Thyristors 30 führt. Die Anode der Diode 159 und der ausgangsseitige Anschluß des Kondensators 167 sind dabei über einen Widerstand miteinander verbunden. In entsprechender Weise verbindet ein Widerstand 162 die Diode 158 mit dem Kondensator 166.

Durch einen Impuls an der Schaltungsanordnung 143 wird der Transitor 151 durchgeschaltet, wodurch sich der Kondensator 167 über die Diode 159 und die Kathodenstrecke des Thyristors 27 auflädt. Ist der Kondensator 167 aufgeladen, so kann der Strom weiter über den Widerstand 163 fließen, bis der Transistor 151 gesperrt ist. Der Thyristor 27 wird hierdurch eingeschaltet. Alternierend zu dem Impuls am Transistor 151 bekommt der Transistor 171 von der Schaltungsanordnung 142 einen Impuls. Der Transistor 171 schaltet hierauf durch, und der Kondensator 167 entlädt sich über den Transistor 171, über die Induktivität und über die Gate-Kathodenstrecke des Thyristors 27. Der GTO-Thyristor 27 wird abgeschaltet. Die Induktivität dient der di/dt-Begrenzung des Abschalt-Gate-Stroms.

Auf entsprechende Weise wie der Thyristor 27 werden auch die Thyristoren 30 bzw. 28 und 29 eingeschaltet. Die zu den Kathoden führenden Steuerleitungen sind hierbei jeweils mit C bezeichnet, während die zu den Steuergittern führenden Leitungen mit G bezeichnet sind.

**Patentansprüche**

1. Wechselrichter mit einer Last, die eine Wechselrichter-Ausgangsspannung bestimmter Kurvenform und Frequenz erzwingt, mit einer Schaltungsanordnung (4) zum Steuern der Phase zwischen Ausgangsspannung ($U_A$) und Ausgangsstrom ($I_A$), dadurch gekennzeichnet, daß der Wechselrichter (2) Abschaltthyristoren (27 bis 30) enthält und daß die Schaltungsanordnung (4) den Wechselrichter so steuert, daß eine Phasenverschiebung zwischen dem Ausgangsstrom ($I_A$) und der Ausgangsspannung ($U_A$) verhindert wird, und daß der Ausgangsstrom ($I_A$) im Nulldurchgang der Ausgangsspannung ($U_A$) geschaltet wird.

2. Wechselrichter nach Anspruch 1, dadurch gekennzeichnet, daß die Last ein Schwingkreis ist, dessen Resonanzfrequenz die Frequenz des Wechselrichters (2) bestimmt.

3. Wechselrichter nach Anspruch 2, dadurch gekennzeichnet, daß der Schwingkreis ein Parallelschwingkreis (16, 17, 18) ist.

4. Wechselrichter nach Anspruch 1, dadurch gekennzeichnet, daß die Last eine elektrische Maschine ist.

5. Wechselrichter nach Anspruch 1, dadurch gekennzeichnet, daß eine Einrichtung (21, 13, 25, 23) vorgesehen ist, welche die Frequenz, mit der die Abschaltthyristoren (27—30) geschaltet werden, auf die Frequenz, die durch die Last bestimmt wird, abstimmt.

6. Wechselrichter nach Anspruch 5, dadurch gekennzeichnet, daß die Einrichtung (21, 13, 25, 23) den Ausgangsstrom ($I_A$) und die Ausgangsspannung ($U_A$) bezüglich ihrer Phasen miteinander vergleich und bei einer vorhandenen Phasenverschiebung die Frequenz, mit der die Abschaltthyristoren (27—30) geschaltet werden, auf die Frequenz, die durch die Last bestimmt wird, abstimmt.

7. Wechselrichter nach Anspruch 6, dadurch gekennzeichnet, daß Abgriffe (20) für den Ausgangsstrom ($I_A$) und Abgriffe (14, 19) für die Ausgangsspannung ($U_A$) über zugeordnete Komparatoren (48, 51) einer Erkennungsschaltung (56) für die Erkennung von Vorzeichen und Betrag der Phasenverschiebung aufgeschaltet sind, und daß der Ausgang der Erkennungsschaltung (56) einem Integrationsglied (58) für die Erzeugung eines vorzeichengerechten, der Phasenverschiebung proportionalen Ausgangssignal aufgeschaltet ist, welches als Eingangssignal für einen als Spannungsfrequenzwandler ausgeführten Taktgeber (13) dient, derart, daß durch die Ausgangsfrequenz des Taktgebers (13) die Frequenz des Wechselrichters (2) so geregelt wird, daß die Phasenverschiebung auf einen kleinstmöglichen Wert rückführbar ist.

8. Wechselrichter nach Anspruch 7, dadurch gekennzeichnet, daß eine Phasenerkennungsschaltung (84) vorgesehen ist, die ein Flipflop (62) aufweist, dem die Ist-Spannung und der Ist-Strom am Ausgang des Wechselrichters (2) auf jeweils einen gesonderten Eingang gegeben werden, die ferner ein NAND-Gutter (60) aufweist, dem der Ist-Strom am Ausgang des Wechselrichters (2) direkt und die Ist-Spannung am Ausgang des Wechselrichters (2) über ein Negationsglied (59) zugeführt sind, wobei die beiden Ausgänge des Flipflops (62) auf jeweils einen ersten Eingang zweier NAND-Gatter (63, 64) gegeben sind, deren jeweils zweiter Eingang mit dem Ausgang des erwähnten NAND-Gitters (60, 61) verbunden sind.

9. Wechselrichter nach Anspruch 1, dadurch gekennzeichnet, daß eine Schaltungsanordnung vorgesehen ist, welche den Ausschaltimpuls ($P_1$) für einen Abschaltthyristor (27—30) um die Löschverzugszeit ($t_{LV}$) früher an das jeweilige Steuergitter eines Abschattthyristors (27—30) legt als dem Nulldurchgang der Ausgangswechselspannung ($U_A$) entspricht.

10. Wechselrichter nach Anspruch 1, dadurch gekennzeichnet, daß die Einschaltimpulse ($P_2$) bei alternierend geschalteten Abschaltthyristoren (27, 30 bzw. 29, 28) einen zeitlichen Abstand von den Abschaltimpulsen ($P_1$) der jeweils anderen Abschaltthyristoren (27 zu 29 bzw. 28 zu 30) aufweisen, wobei dieser zeitliche Abstand größer/gleich der Löschverzugszeit $t_{LV}$ und kleiner/gleich der Löschzeit $t_L$ ist.

11. Wechselrichter nach Anspruch 3, dadurch gekennzeichnet, daß der Parallelschwingkreis eine Induktivität (16) und eine Kapazität (18) enthält, wobei die Induktivität (16) oder die Kapazität (18) Bestandteil eines Verbrauchers sind.

12. Wechselrichter nach Anspruch 3, dadurch gekennzeichnet, daß der Parallelschwingkreis eine Induktivität (16) und eine Kapazität (18) enthält, wobei die Induktivität (16) vom Verbraucher baulich getrennt ist.

13. Wechselrichter nach Anspruch 1, dadurch gekennzeichnet, daß die Last (16, 17, 18) mittels eines Transformators (41, 42) an den Wechselrichter (2) angekoppelt ist.

14. Wechselrichter nach einem oder mehreren der vorangegangenen Ansprüche, dadurch gekennzeichnet, daß ein Anpassungsvorrichtung (25) vorgesehen ist, die eine Einrichtung (100) zum Justieren der Anstiegsflanke eines Impulses aufweist, sowie eine Einrichtung (101) zum Justieren der Abfallflanke und eine Einrichtung (102) zur zeitlichen Verschiebung der justierten Impulse.

15. Wechselrichter nach Anspruch 14, dadurch gekennzeichnet, daß die Einrichtungen (100, 101) zum Justieren der Anstiegs- und der Abfallflanke Komparatoren (107, 108, 117, 118) aufweisen, deren Schaltschwelle verstellbar ist.

16. Wechselrichter nach Anspruch 15, dadurch gekennzeichnet, daß die Komparatoren (107, 108; 112, 118) mit einem Eingang an einem an Masse liegenden Kondensator (10, 110; 119, 120) liegen.

17. Wechselrichter nach einem oder mehreren der vorangegangenen Ansprüche, dadurch gekennzeichnet, daß ein regelbarer Widerstand (123, 124) vorgesehen ist, dem ein an Masse liegender Kondensator (125, 126) sowie ein Inverter (127, 128) mit Schmitt-Trigger-Eingang nachgeschaltet ist.

18. Wechselrichter nach Anspruch 17, dadurch gekennzeichnet, daß der Ausgang des Inverters (127, 128) an Treiberverstärkern (129, 131; 130, 132) liegt, die ein Thyristor-Ansteuereinrichtung (23) beaufschlagen.

19. Wechselrichter nach einem oder nach mehreren der vorangegangenen Ansprüche, dadurch gekennzeichnet, daß die Thyristor-Ansteuereinrichtung (23) Trennschaltungen (140—143) aufweist, die ein Eingangssignal auf zwei Ausgänge (172, 174 bzw. 173, 175) verteilen, wobei der erste Ausgang (172) der einen Trennschaltung (142) einen ersten Transistor (171) und der zweite Ausgang (174) dieser Trennschaltung (142) einen zweiten Transistor (170) steuert, und wobei der erste Ausgang der anderen Trennschaltung (143) einen dritten Transistor (151) und der zweite Ausgang der anderen Trennschaltung (142) einen vierten Transistor (150) steuert.

20. Wechselrichter nach Anspruch 19, dadurch gekennzeichnet, daß die Emitter des ersten und des zweiten Transistors (171, 170) über eine Induktivität (155, 154) an den Kollektor eines GTO-Thyristors (27, 30) angeschlossen ist, während sein Kollektor über einen Kondensator (167, 166) an dem Steuergitter dieses GTO-Thyristors (27, 30) liegt.

21. Wechselrichter nach Anspruch 1, dadurch gekennzeichnet, daß eine RCD-Beschaltung (35, 36, 37) parallel zur Anoden-Kathoden-Strecke des einen GTO-Thyristors (z.B. 27) vorgesehen ist.

22. Wechselrichter nach Anspruch 1, dadurch gekennzeichnet, daß der Anstieg der durch die Last erzwungenen Spannung ($U_D$, $U_{27}$) wenigstens vom Nulldurchgang bis zum Löschzeitpunkt ($t_L$) sehr flach verläuft.

**Revendications**

1. Onduleur comportant une charge qui fournit une tension de sortie d'onduleur de courbe et de fréquence déterminées, avec un circuit (4) pour la commande de la phase entre la tension de sortie ($U_A$) et l'intensité de sortie ($I_A$), caractérisé en ce que l'onduleur (2) contient des thyristors de coupure (27 à 30) et en ce que le circuit (4) commande l'onduleur de manière à empêcher un déphasage entre l'intensité de sortie ($I_A$) et la tension de sortie ($U_A$) et en ce que l'intensité de sortie ($I_A$) est commandée au passage par zéro de la tension de sortie ($U_A$).

2. Onduleur selon la revendication 1, caractérisé en ce que la charge est un circuit oscillant dont la fréquence de résonance détermine la fréquence de l'onduleur (2).

3. Onduleur selon la revendication 2, caractérisé en ce que le circuit oscillant est un circuit oscillant parallèle (16, 17, 18).

4. Onduleur selon la revendication 1, caractérisé en ce que la charge est une machine électrique.

5. Onduleur selon la revendication 1, caractérisé en ce qu'on prévoit un dispositif (21, 13, 25, 23) qui adpate la fréquence à laquelle sont commandés les thyristors de coupure (27—30) à la fréquence qui est déterminée par la charge.

6. Onduleur selon la revendication 5, caractérisé en ce que le dispositif (21, 13, 25, 23) compare entre elles les phases de l'intensité de sortie ($I_A$) et la tension de sortie ($U_A$) et, en cas de déphasage, adapte la fréquence à laquelle sont commandés les thyristors de coupure (27—30) à la fréquence qui est déterminée par la charge.

7. Onduleur selon la revendication 6, caractérisé en ce qu'on prévoit des prises (20) pour l'intensité de sortie ($I_A$) et des prises (14, 19) pour la tension de sortie ($U_A$), par des comparateurs (48, 51) correspondants d'un circuit de détection (56) pour la détection du signe et de la valeur du déphasage et en ce que la sortie du circuit de détection (56) est reliée à un organe d'intégration (58), pour la production d'un signal de sortie, proportionnel au déphasage et tenant compte du signe, qui sert de signal d'entrée à une horloge (13) se présentant sous la forme d'un convertisseur tension-fréquence, de manière que par la fréquence de sortie de l'horloge (13), la fréquence de l'onduleur (2) soit réglée de façon à ramener le déphasage à une valeur aussi faible que possible.

8. Onduleur selon la revendication 7, caractérisé en ce qu'on prévoit un circuit de détection de phase (84) qui comporte une bascule bistable (62) qui reçoit la tension de consigne et l'intensité de consigne à la sortie de l'onduleur (2), à une entrée séparée, qui comporte en outre une porte NON-ET (60) à laquelle l'intensité de consigne à la sortie de l'onduleur (2) est envoyée directement et la tension de consigne à la sortie de l'onduleur (2) est envoyée, par un organe de négation (59), les deux sorties de la bascule bistable (62) étant données chacune à une première entrée de deux portes NON-ET (63, 64) dont la deuxième entrée est reliée à la sortie de la porte NON-ET (60, 61) citée.

9. Onduleur selon la revendication 1, caractérisé en ce qu'on prévoit un circuit qui applique l'impulsion de coupure ($P_1$) pour un thyristor de coupure (27—30), à la grille de commande d'un thyristor de coupure (27—30) plus tôt, d'une temporisation d'effacement ($t_{LV}$), par rapport au passage par zéro de la tension alternative de sortie ($U_A$).

10. Onduleur selon la revendication 1, caractérisé en ce que les impulsions de mise en circuit ($P_2$), dans le cas de thyristors de coupure (27, 30 ou 29, 28) commandés en alternance, se trouvent à un intervalle de temps des impulsions de coupure ($P_1$) des autres thyristors de coupure (27 par rapport à 29 ou 28 par rapport à 30), cet intervalle de temps étant supérieur/égal à la temporisation d'effacement ($t_{LV}$) et inférieur/égal au temps d'effacement ($t_L$).

11. Onduleur selon la revendication 3, caractérisé en ce que le circuit d'oscillation parallèle contient une inductance (16) et une capacité (18), l'inductance (16) ou la capacité (18) faisant partie intégrante d'un récepteur.

12. Onduleur selon la revendication 3, caractérisé en ce que le circuit oscillant parallèle contient une inductance (16) et une capacité (18), l'inductance (16) étant séparée, dans sa construction, du récepteur.

13. Onduleur selon la revendication 1, caractérisé en ce que la charge (16, 17, 18) est accouplée à l'onduleur (2), par un transformateur (41, 42).

14. Onduleur selon une ou plusieurs des revendications précédentes, caractérisé en ce qu'on prévoit un dispositif d'adaptation (25) qui comporte un dispositif (100) en vue d'ajuster les flancs de montée d'une impulsion, ainsi qu'un dispositif (101) en vue d'ajuster les flancs de descente et un dispositif (102) pour le décalage dans le temps des impulsions ajustées.

15. Onduleur selon la revendication 14, caractérisé en ce que les dispositifs (100, 101) destinés à ajuster les flancs de montée et de descente, comportent des comparateurs (107, 108, 117, 118) dont le seuil de commande est réglable.

16. Onduleur selon la revendication 15, caractérisé en ce que les comparateurs (107, 108; 117, 118) sont reliés à une entrée d'un condensateur (109, 110; 119, 120) relié à la masse.

17. Onduleur selon une ou plusieurs des revendications précédentes, caractérisé en ce qu'on prévoit une résistance (123, 124) réglable, en aval de laquelle est monté un condensateur (125, 126) relié à la masse ainsi qu'un inverseur (127, 128) avec une entrée je bascule de Schmitt.

18. Onduleur selon la revendication 17, caractérisé en ce que la sortie de l'inverseur (127, 128) est reliée à des amplificateurs d'attaque (129, 131; 130, 132) qui agissent sur un dispositif de commande de thyristor (23).

19. Onduleur selon une ou plusieurs des revendications précédentes, caractérisé en ce que le dispositif de commande de thyristor (23) comporte des circuits de séparation (140—143) qui partagent un signal d'entrée sur deux sorties (172, 174 ou 173, 175), la première sortie (172) d'un circuit de séparation (142) commandant un premier transistor (171) et la deuxième sortie (174) de ce circuit de séparation (142) commandant un deuxième transistor (170) et la première sortie de l'autre circuit de séparation (143) commandant un troisième transistor (151) et la deuxième sortie de l'autre circuit de séparation (143) commandant un quatrième transistor (150).

20. Onduleur selon la revendication 19, caractérisé en ce que les émetteurs du premier et du deuxième transistor (171, 170) sont reliés au collecteur d'un thyristor GTO (27, 30), par une inductance (155, 154), tandis que son collecteur est relié à la grille de commande de ce thyristor GTO (27, 30), par un condensateur (167, 166).

21. Onduleur selon la revendication 1, caractérisé en ce qu'on prévoit un circuit RCD (35, 36, 37), parallèle au parcours anode -cathode d'un thyristor GTO (par exemple 27).

22. Onduleur selon la revendication 1, caractérisé en ce que la montée de la tension ($U_D$, $U_{27}$), fournie par la charge, est très plate, au moins du passage par zéro jusqu'au temps d'effacement ($t_L$).

**Claims**

1. Converter with a load which constrains a converter output voltage of predetermined curvature and frequency, with a circuit arrangement (4) for controlling the phase between the output voltage ($U_A$) and the output current ($I_A$), characterised in that the converter (2) contains turn-off thyristors (27—30) and that the circuit arrangement (4) so controls the converter that a phase displacement between the output current ($I_A$) and the output voltage ($U_A$) is prevented, and that the output current ($I_A$) is switched when the output voltage ($U_A$) crosses zero.

2. Converter according to Claim 1, characterised in that the load is a resonant circuit the resonant frequency of which determines the frequency of the converter (2).

3. Converter according to Claim 2, characterised in that the resonant circuit is a parallel resonant circuit (16, 17, 18).

4. Converter according to Claim 1, characterised in that the load is an electric machine.

5. Converter according to Claim 1, characterised in that a device (21, 13, 25, 23) is provided which tunes the frequency with which the turn-off thyristors (27—30) are switched to the frequency determined by the load.

6. Converter according to Claim 5, characterised in that the device (21, 13, 25, 23) compares the phases of the output current ($I_A$) and the output voltage ($U_A$) and on occurrence of a phase displacement tunes the frequency with which the turn-off thyristors (27—30) are switched to the frequency which is determined by the load.

7. Converter according to Claim 6, characterised in that taps (20) for the output current ($I_A$) and taps (14, 19) for the output voltage ($U_A$) are connected via associated comparators (48, 51) of a recognition circuit (56) for detecting the sign and magnitude of the phase displacement, and that the output of the recognition circuit (56) is connected to an integration member (58) for producing an output signal which is of the correct sign and which is proportional to the phase displacement, this output signal serving as an input signal for a pulse generator (13) constructed as a voltage-frequency converter in such a manner that by means of the output frequency of the pulse generator (13) the frequency of the converter (2) is controlled so that the phase displacement can be fed back to the smallest possible value.

8. Converter according to Claim 7, characterised in that a phase detection circuit (84) is provided which has a flip-flop (62) to respectively separate inputs of which the actual voltage and actual current at the output of the converter (2) are fed, and which further has a NAND gate (60) to which the actual current at the output of the converter (2) is fed directly and the actual voltage at the output of the converter (2) is fed via an inverting member (59), the two outputs of the flip-flop (62) being passed to respective first inputs of two NAND gates (63, 64) the respective second inputs of which are connected with the output of the mentibned NAND gates (60, 61).

9. Converter according to Claim 1, characterised in that a circuit arrangement is provided which passes the turn-off pulse ($P_1$) for a turn-off thyristor (27—30) earlier than the zero crossing of the alternating voltage output ($U_A$) by an amount of time corresponding to the gate controlled delay time ($t_{LV}$) to the respective control gate of a turn-off thyristor (27—30).

10. Converter according to Claim 1, characterised in that for alternatingly switched turn-off thyristors (27, 30 and 29, 28) the switch-on pulses ($P_2$) of one pair are separated by a time interval from the switch-off pulses ($P_1$) of the other pair of turn-off thyristors (27 to 29 and 28 to 30), respectively, this time interval being greater than or equal to the gate-controlled delay time ($t_{LV}$) and is smaller than or equal to the gate-controlled turn-off time ($t_L$).

11. Converter according to Claim 3, characterised in that the parallel resonant circuit contains an inductor (16) and a capacitor (18), the inductor (16) or the capacitor (18) forming part of a consumer or load.

12. Converter according to Claim 3, characterised in that the resonant circuit contains an inductor (16) and a capacitor (18) in which the inductor (16) is constructionally separated from the consumer.

13. Converter according to Claim 1, characterised in that the load (16, 17, 18) is coupled to the converter (2) by a transformer (41, 42).

14. Converter according to one or more of the preceding Claims, characterised in that a matching device (25) is provided which has a device (100) for trimming the leading edge of a pulse, as well as a device (101) for trimming the trailing edge and the device (102) for time-shifting the trimmed pulse.

15. Converter according to Claim 14, characterised in that the devices (100, 101) for trimming the leading and trailing edges include comparators (107, 108, 117, 118) the switching threshold of which is adjustable.

16. Converter according to Claim 15, characterised in that one input of the comparators (107, 108; 117, 118) are connected to a grounded capacitor (109, 110; 119, 120).

17. Converter according to one or more of the preceding Claims, characterised in that an adjustable resistor (123, 124) is connected after a grounded capacitor (125, 126) and an inverter (127, 128) with a Schmitt-trigger input.

18. Converter according to Claim 17, characterised in that the output of the inverter (127, 128) is connected to driver amplifiers (129, 131; 130, 132) which activate a thyristor control device (23).

19. Converter according to one or more of the preceding Claims, characterised in that a thyristor control device (23) has separating circuits (140—143) which distribute the input signal to two outputs (172, 174 or 173, 175), whereby the first output (172) of one of the separating circuits (142) controls a first transistor (171) and a second output (174), and a second output of this separating circuit (142) controls a second transistor (170), and wherein the first output of the other separating circuit (143) controls a third transistor (151) and the second output of the other separation circuit (142) controls a fourth transistor (150).

20. Converter according to Claim 19, characterised in that the emitters of the first and second transistors (171, 170) are connected via an inductor (155, 154) to the collector of a GTO thyristor (27, 30) while its collector is connected via a capacitor (167, 166) to the control gate of this GTO thyristor (27, 30).

21. Converter according to Claim 1, characterised in that an RCD circuit (35, 36, 37) is provided parallel to the anode-cathode section of one GTO thyristor (e.g. 27).

22. Converter according to Claim 1, characterised in that the rise of the voltage ($U_D$, $U_{27}$) caused by the load runs very flat at least from the zero crossing to the turn-off time ($t_L$).

FIG.1

FIG.2

$U=$    $U_A$    $I_A$

FIG.3

$I_T$    A    $K_1$    $P_{RQ}$    $K_2$    $U_D$    t

$t_{LV}$    $t_L$

FIG.4

## FIG.5

## FIG.6

FIG.7

FIG. 8

FIG. 10

FIG.9a

FIG.9b

FIG. 11

EP 0 180 966 B1

FIG.12